(19) Europäisches Patentamt
European Patent Office
Office européen des brevets

(11) Publication number: 0 083 232
A1

# (12) EUROPEAN PATENT APPLICATION

(21) Application number: 82306950.5

(22) Date of filing: 24.12.82

(51) Int. Cl.$^3$: C 08 G 18/80
C 08 G 18/08, C 08 G 18/64
C 09 D 5/40, C 09 D 3/48

(30) Priority: 28.12.81 US 334863
28.12.81 US 334864

(43) Date of publication of application:
06.07.83 Bulletin 83/27

(84) Designated Contracting States:
DE FR GB

(71) Applicant: FORD MOTOR COMPANY LIMITED
Eagle Way
Brentwood Essex CM13 3BW(GB)

(84) Designated Contracting States:
GB

(71) Applicant: FORD-WERKE AKTIENGESELLSCHAFT
Ottoplatz 2 Postfach 21 03 69
D-5000 Köln 21(DE)

(84) Designated Contracting States:
DE

(71) Applicant: FORD FRANCE SOCIETE ANONYME
344 Avenue Napoléon Bonaparte B.P. 307
F-92506 Rueil Malmaison Cedex(FR)

(84) Designated Contracting States:
FR

(72) Inventor: Kordomenos Panagiotis I.
36430 Union Lake Apt. 303
Mt. Clemens Michigan 48043(US)

(74) Representative: Drakeford, Robert William et al,
Ford Motor Company Limited 15/448, Research & Engineering Centre Laindon
Basildon Essex SS15 6EE(GB)

## (54) Aqueous compositions comprising blocked isocyanate crosslinking agent.

(57) Aqueous coating compositions comprising film forming resin bearing reactive functionality and blocked polyisocyanate crosslinking agent which is at least partially solubilized with organic acid and which is stable at room temperature in the presence of said functionality, but reactive therewith at elevated temperatures. The blocked isocyanate is prepared by

(A) reacting (i) organic diisocyanate bearing one isocyanate group which is more reactive than the other and (ii) sufficient active hydrogen containing blocking agent to react with substantially all of said more reactive isocyanate groups; and

(B) reacting hydroxy functional amine bearing at least two hydroxyl groups and at least one tertiary amine nitrogen with sufficient reaction product (A) to react substantially all free or unblocked isocyanate groups of reaction product (A) with hydroxyl groups of said amine.

Alternatively, the blocked isocyanate is prepared by

(A) reacting an excess of organic diisocyanate with dihydroxy functional amine containing at least one tertiary nitrogen to form a isocyanate terminated tertiary amine containing intermediate; and

(B) reacting the intermediate of (A) with sufficient active hydrogen containing blocking agent to react with substantially all of the terminal isocyanate groups of the intermediate.

EP 0 083 232 A1

Croydon Printing Company Ltd

AQUEOUS COMPOSITIONS COMPRISING BLOCKED ISOCYANATE CROSSLINKING AGENT

DESCRIPTION

This invention relates to aqueous coating compositions comprising blocked isocyanate crosslinking agent.

Blocked isocyanates have been used quite extensively as crosslinking agents in aqueous coating compositions, particularly in cationic electrodeposition systems. Exemplary of the numerous patents teaching the use of such blocked isocyanate crosslinking agents are U.S. Patents: 3,799,854; 3,935,087; 4,021,050; 4,036,795 and 4,134,865. Typically, in accordance with the prior art, a difunctional or trifunctional blocked isocyanate or isocyanate prepolymer is mixed with a hydroxyl or amine functional polymer and then codispersed in a water/acid solution. However, since these blocked isocyanates or isocyanate prepolymers contain no ionizable groups, they present certain limitations which impact upon the formulation of the coating bath. In particular, there are limitations as to the amount of crosslinker that can practicably be codispersed in the composition and there are limitations in regard to the type of blocking agent

that can be used to block the free isocyanate groups in the preparation of the blocked isocyanate. Both of these factors have a bearing on the characteristics of the composition.

The amount of crosslinker that can be introduced into these types of systems is limited because, depending upon the type of resin that is synthesized and used as the primary film former of the composition (solution, emulsion or dispersion formed resin), the hydrophilicity of the resin may depend, to a greater or lesser extent, on the number of ionizable groups that exist in the total mixture, including the crosslinking agent. For this reason, mixtures containing higher amounts of crosslinking agent containing no ionizable groups may result in substantially less stable systems. The type of blocking agent also may affect the stability of the entire system; for example, cyclic compounds such as lactams and triazoles, commonly used blocking agents, may result in crosslinking agents with bulky and rigid structures that are difficult to codisperse with the other components of the composition.

As a result of the above, formulation of a stable solution or bath in accordance with these prior art teachings may require the use of lesser amounts of blocked isocyanate crosslinking agent than may be desirable when attempting to optimize the entire system and/or may require a limitation on the type of blocking agents that may be employed. In fact, some of the systems, such as those represented by U.S. Patents 3,799,854 and 4,031,050 are unstable at recommended levels of isocyanate crosslinking agent when in the form of a water in oil dispersion, a dispersion which obviously would be the most cost effective for purposes of shipping. As a result, it is necessary to invert such dispersions to oil in water by adding significant amounts of water to the system in order to stabilize it. As will be appreciated, the requirement

that such additional water be added, thus resulting in a relatively low solids systems, in order to get stability results in the shipment of large quantities of water, a fact which is economically unattractive.

Another method of employing blocked isocyanates in electrodeposition systems is taught by a number of U.S. patents which are represented by 4,190,564 and 4,197,224. In accordance with those patents, a half-blocked isocyanate is reacted with a hydroxy functional backbone that results in the formation of a self-crosslinking system. This type of system, however, has major drawbacks since subsequent reactions, such as chain extensions, or introduction of ionizable groups are limited due to the possible unblocking of the isocyanate group at the temperature at which these reactions take place.

According to the present invention there is provided an aqueous coating composition comprising a film-forming resin bearing reactive functionality and a blocked polyisocyanate crosslinking agent capable of reacting with the reactive functionality at elevated temperatures, characterised in that the crosslinking agent comprises an organic diisocyanate in which one isocyanate group has been blocked with a blocking agent containing reactive hydrogen, and the other isocyanate group has been reacted with an hydroxy group of an hydroxy functional amine containing at least two hydroxy groups and at least one tertiary nitrogen, and in that the crosslinking agent is at least partially solubilized or dispersed in the aqueous composition by an organic acid which protonates at least some of the tertiary nitrogen atoms of the crosslinking agent.

By using blocked isocyanate crosslinking agents which contain ionizable groups, it is possible to produce aqueous coating compositions, particularly cationic electrodeposition resin systems, which can exist at higher solids in the form of uninverted dispersions as a result of the system being capable of holding greater amounts of crosslinking agent and still remaining stable. By preparing compositions including such blocked isocyanate crosslinking agents containing ionizable groups, it is possible to

achieve greater crosslinking efficiency and, thus, achieve cathodic electrodeposition systems which are capable of curing at reduced temperatures.

The compositions of this invention are aqueous coating compositions comprising film forming resin bearing reactive functionality and blocked isocyanate crosslinking agent which is stable at room temperature in the presence of the reactive functionality and reactive with that reactive functionality at elevated temperatures. Particularly preferred compositions of this type to which the improvement of the invention relates are those aqueous coating compositions which are adapted to be applied to a substrate-cathode by electrodeposition and which are solubilised, at least in part, by ionisation as a result of protonation of an amine nitrogen by an organic acid. Such compositions may comprise, generally, epoxy/amine adduct film forming resin bearing hydroxyl functionality and blocked isocyanate crosslinking agent which is stable at room temperature in the presence of the hydroxyl functionality and reactive with that hydroxyl functionality at elevated temperatures. In particular, such compositions may be used in the form of aqueous bath compositions which are adapted to electrodeposit a corrosion resistance, curable coating on a substrate-cathode. Generally, such a bath comprises water, organic acid having a dissociation constant of at least $10^{-5}$, amine functional film forming resin which is solubilised at least in part by protonation by the organic acid discussed above, and blocked polyisocyanate crosslinking agent.

In accordance with one embodiment of the invention, the crosslinking agent comprising a compound prepared by: (A) reacting (i) organic diisocyanate bearing one isocyanate group which is more reactive than the other and (ii) a sufficient amount of active hydrogen containing blocking agent to react with substantially all of the more reactive isocyanate groups; and (b) reacting hydroxy functional amine bearing at least two hydroxyl groups and at least one tertiary amine nitrogen with sufficient

amount of reaction product (A) to react substantially all of the free or unblocked isocyanate groups of reaction product (A) with hydroxyl groups of the amine.

The crosslinking agent is prepared by:-

(A) reacting an excess of organic diisocyanate with dihydroxy functional amine containing at least one tertiary nitrogen to form isocyanate terminated tertiary amine containing intermediate; and

(B) reacting intermediate (A) with sufficient active hydrogen containing blocking agent to react with substantially all of the terminal isocyanate groups of the intermediate.

Preparation of the blocked isocyanate crosslinking agent useful in compositions of the invention and the other components of compositions in which the improved crosslinking agent may be employed will be more fully understood from the following detailed description of the preferred embodiments of the invention.

## Blocked Isocyanate Crosslinking Agent

The crosslinking agent may be prepared by either of two methods.

### First Method

The first step in this method of preparation of the blocked isocyanate crosslinking agent useful in compositions of the invention is the reaction of (i) organic diisocyanate bearing one isocyanate group which is more reactive than the other with (ii) sufficient amount of an active hydrogen containing blocking agent to react with substantially all of the more reactive isocyanate groups, thus providing a half-blocked diisocyanate reactant. The organic diisocyanates employed in the preparation of the crosslinking agent may be selected from the group consisting of aliphatic, cycloaliphatic and aromatic diisocyanates and hybrids of those diisocyanates, provided that any of the diisocyanates selected, as noted above, must have one isocyanate group which is more reactive than the other. Numerous such diisocyanates will be apparent to those skilled in the art; representative of

those organic diisocyanates which are suitable for use in the preparation of the crosslinking agents of the invention are: 1-isocyanato-1(p-phenylisocyanate)methane; 1-isocyanato-2(p-phenylisocyanato)ethane; isophorone diisocyanate; 4,4'-diisocyanato-2-nitro-biphenyl; and diisocyanates having either the formula

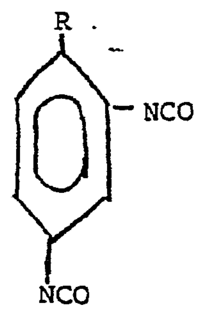

or

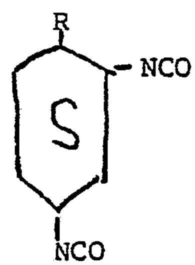

wherein R is selected form the group consisting of methyl, ethyl, t-butyl, chloro, bromomethyl, ethoxy, isobutoxy, isopropyl, trichloromethyl and methoxy.

The active hydrogen containing blocking agents which are reacted with the above described organic diisocyanates may be selected from numerous blocking agents which will also be apparent to those skilled in this art. Representative of those blocking agents which are preferred are those selected from the group consisting of (i) aliphatic, cycloaliphatic and aromatic alkyl monoalcohols, (ii) oximes, (iii) lactams and (iv) triazoles. Any suitable aliphatic, cycloaliphatic and aromatic alkyl monoalcohol may be used as a blocking agent

in accordance with the present invention. For example, aliphatic alcohols, such as methyl, ethyl, chloroethyl, propyl, butyl, amyl, hexyl, heptyl, octyl, nonyl, 3,3,5-trimethylhexanol, decyl, and lauryl alcohols, and the like may be employed. Suitable cycloaliphatic alcohols include, for example, cyclopentanol, cyclohexanol, and the like, while aromatic-alkyl alcohols include phenylcarbinol, methylphenylcarbinol, and the like. Suitable oxime blocking agents include, for example, methylethyl ketone oximé, acetone oxime and cyclohexanone oxime. Examples of lactams which may be used as blocking agents are ε-caprolactam, γ-butyrolactam and pyrrolidone while suitable triazoles include compounds such as 1,2,4 triazole, 1,2,3 benzotriazole, 1,2,3 tolyl triazole, and 4,5 dyphenyl-1,2,3 triazole.

The aforementioned organic polyisocyanate-blocking agent adduct intermediate is formed by reacting a sufficient quantity of the blocking agent with the organic diisocyanate to insure that one of the two -NCO groups on the diisocyanate is reacted. The reaction between the organic diisocyanate and the blocking agent is exothermic; therefore, the diisocyanate and the blocking agent are preferably admixed at temperatures no higher than about 80°C, preferably below about 50°C, to minimize the exotherm effect.

As discussed above, the reaction product of the organic diisocyanate with the active hydrogen containing blocking agent is next reacted with a hydroxy functional amine bearing at least two hydroxyl groups and at least one tertiary amine nitrogen so as to react substantially all free or unblocked isocyanate groups of the diisocyanate/blocking agent intermediate with hydroxyl groups of the amine. The hydroxy functional amines reacted with the intermediate may be selected from aliphatic, cycloaliphatic and aromatic amines. Numerous such amines, which may contain either one or multiple

 

tertiary amine nitrogens, will be apparent to those skilled in the art. One preferred type of hydroxy functional amine is that selected from the group consisting of diols and triols containing a single tertiary nitrogen.

Preferred t-amine functional diols and triols are those represented by the formula

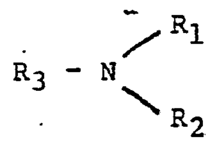

wherein $R_1$ and $R_2$ equal any one of:

$-(CH_2)_nOH$, n = 1-5; or $-(CH_2CH_2O)_nCH_2CH_2-OH$, n = 1-12; or

$-(CH_2CH_2CH_2CH_2CH_2\overset{O}{\overset{\|}{C}}-O)_n CH_2CH_2-OH$, n = 1-12; or

$-(\overset{CH_3}{\overset{|}{CH}}-CH_2-O)_nCH_2CH_2-OH$, n = 1-12; and

$R_3$ equqls either:

$C_1$-$C_4$ alkyl group, preferably methyl; or

any one of those groups suitable for $R_1$ or $R_2$.

Particularly prefered compounds included in this class of materials are tertiary amine functional diols and triols such as methyldiethanol amine, butyldiethanol amine, triethanol amine and phenyldiethanol amine to name just a few. Hydroxy functional amines containing more than one tertiary nitrogen group and at least two hydroxyl groups as well as still other suitable materials will be apparent to those skilled in the art.

As discussed above, in all compositions to which the improvement of this invention applies the blocked isocyanate crosslinking agent prepared as above is solubilized or dispersed at least in part by introduction into the aqueous composition of an organic acid such that at least part of the tertiary nitrogens of the crosslinking agent are protonated so as to ionize the crosslinking agent molecules and allow them to be more readily dispersed or solubilized. Thus, it is the tertiary amine nitrogen, which is subject to protonation by acid, in the crosslinking agent of the compositions of the invention that allows the crosslinking agent to be more readily dispersed, thus, resulting in more stable coating compositions which may include greater amounts of blocked isocyanate crosslinking agent. Preferably, the acid which is employed to solubilize the blocked isocyanate crosslinking agent of the invention is an organic acid having a dissociation constant of at least $10^{-5}$. Representative of the many acids which fall within this category are formic acid, acetic acid, lactic acid and phosphoric acid.

More particularly, according to a method of making the blocked isocyanate crosslinking agent of the invention, the ionizable crosslinker may be prepared by reacting one mole of a blocking agent with one mole of a diisocyanate that has two isocyanate groups with different reactivities and, thus, blocking only one of the isocyanate groups. This reaction takes place by slowly adding the blocking agent into the isocyanate at 90° to 130°F. After the addition is completed the reaction is continued at the same temperature until half the isocyanate groups have been consumed. This is verified by titrating the free isocyanate groups. The half blocked isocyanate is then reacted with a tertiary amine group containing polyol. One equivalent of the polyol is added slowly to one equivalent of the isocyanate. Since the

reaction is exothermic, the temperature is kept at least 30°F below the unblocking temperature of the particular blocking agent that has been used. In certain cases, in order to control the increase in temperature and viscosity, a small amount of solvent may be added. Solvent such as butylcarbitol acetate, methylisobutylketone and in general, solvents that have no functionality reactive with the isocyanate can be used. The end of the reaction is verified by the absence of the isocyanate group in an infra-red spectrum.

Second Method

In the alternative method of producing the crosslinking agent, the first step is the reaction of (i) an excess of organic diisocyanate with dihydroxy functional amine containing at least one tertiary nitrogen to form an isocyanate terminated tertiary amine containing intermediate. The diisocyanate is used in excess in an amount sufficient to insure that the intermediate is isocyanate terminated. Therefore, it is preferable that the organic diisocyanates and the dihydroxy functional amine containing at least one tertiary nitrogen be reacted in a molar ratio of from greater than 1:1 up to 2:1.

There are two preferred types of organic diisocyanates which may be employed in the preparation of the intermediate. First, the organic diisocyanate may be selected from the group consisting of aliphatic, cycloaliphatic and aromatic diisocyanates and hybrids thereof. Secondly, the organic diisocyanate may be an isocyanate terminated polyurethane prepolymer prepared by reacting an excess of an aliphatic, cycloaliphatic or aromatic diisocyanate with a diol having a number average molecular weight ($M_n$) of up to about 500.

Numerous aliphatic, cycloaliphatic or aromatic diisocyanates and hybrids thereof will be apparent to those skilled in the art. Included among the many useful diisocyanates of this type are: m- or p-phenylene diisocyanate; 4,4'-diphenylmethane diisocyanate; 2,4-, or 2,6-tolylene diisocyanate; m- or p-xylylene diisocyanate; hexamethylene diisocyanate; and isophorone diisocyanate. Since preparation of the intermediate in accordance with the reaction scheme described above does not rely upon the relative reactivities of the two isocyanate groups of the diisocyanate, diisocyanates may be selected without regard to the reactivity of the isocyanate groups. This is in contrast to the selection of diisocyanates for preparation of crosslinking agents in accordance with the aforementioned related application. Thus, although it is not necessary to employ a composition in which a diisocyanate in which one isocyanate groups is more reactive than the other, it is permissible to employ such materials. Thus, the diisocyanates described in the aforementioned related application and having one isocyanate group more reactive than the other may be employed in the preparation of the intermediate described above. These diisocyanates are represented by: 1-isocyanato-1(p-phenylisocyanate)methane; 1-isocyanato-2-(p-phenylisocyanato)ethane; 4,4'-diisocyanato-2-nitro-biphenyl; isophorone diisocyante; and compounds having the formulae:

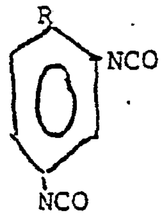

or

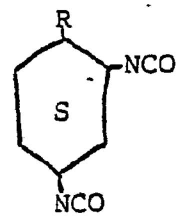

wherein R is selected form the group consisting of methyl, ethyl, t-butyl, chloro, bromomethyl, ethoxy, isobutoxy, isopropyl, trichloromethyl and methoxy.

Any of the aliphatic, cycloaliphatic or aromatic diisocyanates or hybrids thereof as represented by those listed above may be employed in the preparation of the second type of organic diisocyanate employed in the preparation of the intermediate used to make the crosslinking agent of the invention. As noted above, in accordance with this second type of organic diisocyanate, an excess of the diisocyanate is reacted with a diol having a number average molecular weight of up to 500 to form an isocyanate terminated polyurethane prepolymer. The diol employed in the preparation of this isocyanate terminated polyurethane prepolymer may be selected from a wide group of such diols which will be apparent to those skilled in the art.

Representative of preferred diols useful in preparing the isocyanate terminated polyurethane prepolymer are: aliphatic diols having the formula $HO(CH_2)_n-OH$, n=2-8; cycloaliphatic diols; polyester diols of the polycaprolactone type; and polyether diols having the fomula $H[OCH_2CH_2]_n-OH$, n=2-8. Particularly preferred diols for use in preparation of the prepolymer are: 1,4 butanediol; 1,6 hexanediol; neopentyl glycol; 1,5 pentanediol; and 1,4 cyclohexanediol. Most preferably, the diisocyanate and diol employed in the preparation of this isocyanate terminated polyurethane prepolymer are reacted in a molar ratio of 1.5 - 2.0 to 1.

The other reactant in the preparation of the intermediate (A) is a dihydroxy functional amine containing at least one tertiary nitrogen. Generally, it can be said that the dihydroxy functional amine may be selected from a wide variety of aliphatic, cycloaliphatic and aromatic amines. Preferred t-amine functional diols are those represented by the formula

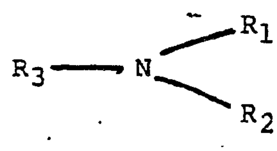

wherein $R_1$ and $R_2$ equal anyone of: $-(CH_2)_n OH$ , n = 1-5; or

$-(CH_2CH_2O)_nCH_2CH_2-OH$, n = 1-12; or

$-(CH_2CH_2CH_2CH_2CH_2\overset{O}{\overset{\|}{C}}-O)_n-CH_2CH_2-OH$, n = 1-12; or

$-(\underset{|}{\overset{CH_3}{}}\!\!CH-CH_2-O)_n-CH_2CH_2-OH$, n = 1-12; and

$R_3 = C_1-C_4$ alkyl group, preferably methyl.

Particularly, preferred compounds included in this class of materials are tertiary amine functional diols such as methyl-diethanol amine, butyl-diethanol amine, methyl dipropanol amine, butyl dipropanol amine and phenyl diethanol amine. Still other diols including tertiary amine nitrogen will be apparent to those skilled in the art.

As noted above, after the intermediate (A) is prepared, it is reacted with a sufficient amount of an active hydrogen containing blocking agent to react with substantially all of the terminal isocyanate groups of the

intermediate. These active hydrogen containing blocking agents which are reacted with the above discribed intermediate may be selected from numerous blocking agents which will be apparent to those skilled in the art. Representative of those blocking agents which are preferred are those selected from the group consisting of (i) aliphatic, cycloaliphatic and aromatic alkyl monoalcohols, (ii) oximes, (iii) lactams and (iv) triazoles. Any suitable aliphatic, cycloaliphatic or aromatic alkyl monoalcohol may be used as a blocking agent in accordance with the present invention. For example, aliphatic alcohols, such as methyl, ethyl, chloroethyl, propyl, butyl, amyl, hexyl, heptyl, octyl, nonyl, 3,3,5-trimethylhexanol, decyl, and lauryl alcohols, and the like may be employed. Suitable cycloaliphatic alcohols include, for example, cyclopentanol, cyclohexanol, and the like, while aromatic-alkyl alcohols include phenylcarbinol, methylphenylcarbinol, and the like. Suitable oxime blocking agents include, for example, methylethyl ketone oxime, acetone oxime and cyclohexanone oxime. Examples of lactams which may be used as blocking agents are t-caprolactam, γ-butyrolactam, and pyrrolidone while suitable triazoles include compounds such as 1,2,4 triazole, 1,2,3 benzotriazole, 1,2,3 tolyl triazole, and 4,5 diphenyl-1,2,3 triazole.

More particularly, according to the method of making the blocked isocyanate crosslinking agent of the invention, the ionizable crosslinker may be prepared by first reacting a diisocyanate or an isocyanate terminated prepolymer with a tertiary amine group containing diol. One equivalent of the diol is added slowly into two equivalents of the diisocyanate, for example, in the presence of a non-reactive solvent at temperatures ranging from about 70° to about 200°F. The ratio of isocyanate to hydroxyl equivalent can be lower than 2 but higher than 1 in order to result in an NCO-terminated adduct. To this

adduct one equivalent of blocking agent may be added slowly keeping the temperature at least 30$^{o}$F lower than the unblocking temperature of the blocking agent. The end of the first step of this reaction is verified by measuring the free isocyanate groups by titration method while the end of the second step can be verified by the same method or by the absence of isocyanate groups in an infra-red spectrum.

Compositions Including Blocked Isocyanate Crosslinking Agent

Included among the many aqueous coating compositions in which the improved blocked isocyanate crosslinking agents of the invention may be employed are those cationic electrodeposition compositions based upon epoxy/amine adducts and epoxy ester/amine adducts as well as acrylic polymers. Exemplary of the aqueous compositions of a non-electrodeposition nature in which the blocked isocyanate crosslinkers may be employed are water-based coating compositions, including topcoats and spray primers.

By way of example, several of the preferred electrocoat compositions are discussed in greater detail hereinafter.

Cationic Electrodeposition Compositions Comprising Epoxy Resins

As noted above, one of the electrodeposition compositions in which the blocked isocyanate crosslinking agent of the invention may be employed comprises an epoxy/amine adduct. The epoxy material utilised to form

the adduct can be any monomeric or polymeric compound or mixture of compounds having an average of one or more epoxy groups per molecule. Monoepoxides can be utilized, but it is preferred that the epoxy compound be resinous and that the polyepoxide contain two or more epoxy groups per molecule. The preferred polyepoxides are of relatively high molecular weight having molecular weights of at least 350, preferably within the range of 350 to 2,000. The polyepoxide can be essentially any of the well known types such as polyglycidyl ethers of polyphenols, for example, bisphenols such as bisphenol A. These can be produced by etherification of a polyphenol with epihalohydrin in the presence of alkali. The phenolic compound may be, for example, bis(4-hydroxyphenol)-2,2-propane, 4,4'-dihydroxybenzophenone, bis(4-hydroxyphenyl)-1,1-ethane, bis(4-hydroxyphenol)-1,1-isobutane, bis(4-hydroxytertiarybutyl-phenyl)-2,2-propane, bis(2-hydroxynaphthyl)methane, 1,5-dihydroxynapthalene, or the like. In many instances, it is desirable to employ such polyepoxides having higher molecular weights and containing aromatic groups. This can be provided by reacting the diglycidyl ether above with a polyphenol such as bisphenol A and then further reacting this product with epichlorohydrin to produce a polyglycidyl ether. Preferably the polyglycidyl ether of a polyphenol contains free hydroxyl groups in addition to epoxide groups.

While the polyglycidyl ethers of polyphenols may be employed per se, it is frequently desirable in such compositions to react a portion of the reactive sites (hydroxyl or in some instances epoxy) with a modifying material to vary the film characteristics of the resin. The esterification of epoxy resins with carboxylic acids, especially fatty acids, is well known in the art and need not be discussed in detail. Especially preferred are saturated fatty acids and especially pelargonic acid.

Likewise, the epoxy resin may be modified with isocyanate group containing organic materials or other reactive organic materials.

Another quite useful class of polyepoxides are polyglycidyl ethers of phenolic novolak resins.

Also suitable are the similar polyglycidyl ethers of polyhydric alcohols which may be derived from such polyhydric alcohols as ethylene glycol, diethylene glycol, triethylene glycol, 1,2-propylene glycol, 1,4-propylene glycol, 1,5-pentanediol, 1,2,6-hexanetriol, glycerol, bis(4-hydroxycyclohexyl)-2,2-propane and the like.

The polyglycidyl ethers of polyphenols are preferred polyepoxides. Preferred polyglycidyl ethers of polyphenols have molecular weights of at least 350, preferably within the range of 350 to 2,000, and epoxy equivalents within the range of 180 to 1,000.

As previously set forth, the epoxy containing materials are reacted with an amine to form an adduct. The amine employed may be any primary or secondary amine, preferably a secondary amine. Preferably the amine is a water soluble amino compound. Examples of such amines include mono- and dialkylamines such as methylamine, ethylyamine, propylamine, butylamine, dimethylamine, diethylamine, dipropylamine, dibutylamine, methylbutylamine, methylethanolamine, diethanolamine, dipropanolamine and the like.

While in most instances reasonably low molecular weight amines may be employed, it is possible to employ higher molecular weight monoamines, especially where it is preferred that the molecule be flexibilized or further modified by the structure contributed by the amines. Likewise, a mixture of low molecular weight and high molecular weight amines may be employed to modify the resin properties.

Further, it is possible for such amines to contain other constituents so long as they do not

interfere with the reaction of the amine and the epoxy are of the nature or employed under conditions so that they do not gel the reaction mixture.

The reaction of the amine with the epoxy group containing material takes place upon admixing the amine and the epoxy group containing material. In fact, it may be exothermic. If desired, the reaction mixture, may be heated to moderate temperatures, that is 50° to 150°C, although higher or lower temperatures may be used, depending upon the desired reaction. It is frequently desirable, in any event, at the completion of the reaction to elevate the temperature at least slightly for a sufficient time to insure a complete reaction.

The amount of amine reacted with the epoxy group containing material is at least the amount sufficient to render the resin cationic in character, that is, transportable to the cathode when acid solubilized. In some instances, substantially all of the epoxy groups in resin are reacted with an amine. However excess epoxy groups may remain which hydrolyze upon contact with water to form hydroxyl groups.

The blocked isocyanate crosslinking agent of the invention is preferably admixed with the amine epoxy adduct in ratios of from about 0.5 to about 2.0 urethane groups for each hydroxyl group.

It is usually necessary, in order to insure rapid and complete reaction of the two components, to have present in the coating mixture a catalyst for urethane formation. However, if curing temperatures after deposition are high enough, catalyst may not be needed. Also, if a proper blocking agent for the isocyanate is employed, catalysts may not be needed. Examples of externally added catalysts are the tin compounds such as dibutyl tin dilaurate and tin acetate, but other catalysts for urethane formation known in the art may be employed. The catalyst is employed in that amount which effectively

promotes reaction in the deposited film -- for example, amounts varying from about 0.5 percent to about 4.4 percent by weight of the amine-epoxy adduct. Typically about 2 percent is preferred.

The capped isocyanate/amine epoxy adduct catalyst mixture is electrodeposited on a suitable substrate and cured at elevated temperatures, such as from about 250° to about 600°F, the film curing at least in part through urethane crosslinks. The alcohol released may either volatilize or remain in the mixture as a plasticizer, depending essentially on its boiling point.

Epoxy Ester Compositions Including Blocked Isocyanate Crosslinking Agent

The polymeric polyepoxides described above can be reacted with dimer acids to chain extend and thereby increase the molecular weight of the polymeric polyepoxides. The reaction takes place between the carboxylic groups and the epoxide rings, forming an ester linkage and a secondary hydroxyl group. These epoxy ester resins are prepared by reacting about 0.1 to about .9 equivalents of dimer acid per equivalent of epoxy group. The product of essentially linear polymers is preferred; however, branched polymers could also be utilized and dimer acids that contain up to 30 percent by weight trimer units could also be employed. The chain extension is accomplished by mixing the dimer acid and the polyepoxide, optionally in the presence of inert solvent, and conducting the reaction at a temperature of about 140° - 170°C in the presence of a catalyst such as a tertiary amine catalyst. The chain extenders are organic dimer and trimer acids as are well known to the art. Relatively high molecular weight dimer and trimer acids are products of polymerization of $C_4$ - $C_{18}$ fatty acids. Although several mixtures of dibasic, tribasic and monobasic acids

are commercially available, most useful in these types of compositions are products that contain mostly dibasic acid and low amounts of tribasic and monobasic acids. Low molecular weight dibasic and tribasic acids such as adipic and azelaic acid are also useful.

Ionizable groups are introduced into these chain extended epoxy resins in the same manner as in the case of the unextended resins described earlier. Also, the remainder of the composition, including the blocked crosslinking agent, catalysts, etc. is similar to the unextended epoxy resin containing composition.

Compositions Comprising Acrylic Polymers And Blocked Isocyanate Crosslinking Agent

Acrylic polymers which contain ionizable groups and sufficient hydroxyl functionality can be synthesized according to two methods. In the first method an amine functional monoethylenically unsaturated monomer is copolymerized with a hydroxy monomer and a variety of other non-functional acrylic and vinyl monomers. The monoethylenically unsaturated amines are well known and are commercially available. Compounds useful in these compositions are dimethylaminopropyl methacrylate, dimethylaminoethyl methacrylate, monomethylaminoethyl methacrylate, aminoethyl methacrylate and the corresponding acrylates. Also, aminoethyl methacrylate and t-butylaminoethyl methacrylate may be used. Monoethylenically unsaturated tertiaryaminoamides are also useful in these types of compositions. The amine functional unsaturated monomer is copolymerized with a hydroxy functional monomer such as hydroxyethyl acrylate, hydroxyethyl methacrylate, hydroxypropyl methacrylate and a variety of non-reactive monoethylenically unsaturated monomers such as styrene, vinyltoluene, methyl methacrylate, ethylacrylate, acrylonitrile and the like.

The second method of preparing this type of acrylic polymer comprises using a monoethylenically unsaturated epoxy functional monomer which is copolymerized with a hydroxy functional monomer and a variety of non-functional monomers. The copolymers contain up to 30 percent epoxy functional copolymer such as glycidyl methacrylate and up to 30 percent hydroxy functional monomer such as hydroxy acrylate, hydroxypropyl methacrylate and the like. The epoxy groups of the acrylic resin are subsequently reacted with a secondary amine of the kind described earlier and the system is mixed with sufficient amount of ionizable crosslinker and codispersed in a water/acid solution. Use of these resins in electrocoat compositions and the nature of the compositions will be apparent to those skilled in the art, particularly in view of the earlier discussed compositions.

Aqueous compositions containing the above components are highly useful as coating compositions, and are particularly suited to application by electrodeposition, although they may also be applied by conventional coating techniques. Generally, it is necessary to add a neutralizing acid to the composition to obtain a suitable aqueous composition. It is desirable to electrodeposit these coatings from a solution having a pH between 3 and about 9.

Neutralization of these products is accomplished by reaction of all or part of the amino groups with a water soluble acid - for example, formic acid, acetic acid, or phosphoric acid or the like. The extent of neutralization depends upon the particular resin and it is only necessary that sufficient acid be added to solubilize or disperse the resin. In the compositions of this invention, it is the addition of this same acid which acts to solubilize or disperse the blocked isocyanate crosslinking agents of the invention.

Electrodepositable compositions, all referred to as "solubilized" or "dispersed" in fact are considered a complex solution, dispersion or suspension, or a combination of one or more of these classes in water, which acts as an electrolyte under the influence of an electric current. While, no doubt, in some cases the resin is in solution, it is clear that in some instances, and perhaps in most, the resin is a dispersion which may be called a molecular dispersion of molecular size between a colloidal suspension and a true solution.

In most instances a pigment composition and, if desired, various additives such as antioxidants, surface active agents, coupling solvents and the like known in the electrodeposition art are included in the composition. As noted above, when employing the blocked isocyanate crosslinking agent of this invention wherein the crosslinking agent includes ionizable tertiary amine groups, it is possible to obtain compositions which have a higher resin concentration than has previously been possible. As also noted above, this allows the composition to exist as an uninverted dispersion, thereby avoiding the shipment of large amounts of water and allowing inclusion of a sufficient amount of crosslinking agent to effect a more complete cure of the composition at lower temperature.

In cathodic electrodeposition processes employing aqueous coating compositions of the type described above and the blocked isocyanate crosslinking agent of the invention, the aqueous composition is placed in contact with an electrically conductive anode and an electrically conductive cathode, with the surface to be coated being the cathode. Upon passage of electric current between the anode and the cathode, while in contact with the bath containing the coating composition, an adherent film of coating composition is deposited on the cathode. This is in contrast to processes utilizing polycarboxylic acid resins which are deposited on the anode.

The conditions under which the electrodeposition is carried out are in general similar to those used in electrodeposition of other types of coatings. The applied voltage may be very greatly and can be, for example, as low as 1 volt or as high as several thousand volts, although typically between 50 volts and 500 volts. The current density is usually between about 1.0 amp. and 1.5 amp. per sq. ft. and tends to decrease during electrodeposition.

After deposition, the coating is cured at elevated temperatures by any convenient means such as baking ovens or banks of infra-red heat lamps. Curing temperatures are preferably from about 350° to about 425°F, although curing temperatures from about 250° to about 500° or even 600°F may be employed, if desired.

The invention will be further understood by referring to the following detailed examples. It should be understood that the specific examples are presented by way of illustration and not by way of limitation. Unless otherwise specified, all references to "parts" are intended to mean parts by weight.

Example I

Into a suitable reactor were charged 1392 parts of 2,4-toluene diisocyanate (Hylene T from DuPont) under a nitrogen blanket. 904 parts of ε-caprolactam were charged in a period of one hour keeping the temperature below 110°F (43°C). After the addition was completed the batch was kept for 60 min. at 120°F and the percent -NCO conversion was measured to be 50%. At this point 476 parts of N-methyl diethanol amine were charged in a period of one hour. The temperature of the exothermic reaction

was kept below 240°F by external cooling. After the addition was completed the batch was kept at 240°F for 15 minutes at which point an infra-red spectrum of the product showed that all the isocyanate groups were reacted. The batch was then thinned with 1190 parts of ethyl cellosolve. The final product had a viscosity of $Z_3$.

Example II

Into a suitable reactor were charged 582 parts of toluene diisocyanate under a nitrogen blanket. 287 parts of methyl ethyl ketoxime were added dropwise in a period of two hours while keeping the temperature below 110°F (43°C) by external cooling. After the addition was completed the batch was kept for one hour at 170°F. 164 parts of triethanol amine were added in a period of one hour. The temperature of the exothermic reaction was kept below 220°F by external cooling. After the addition was completed the batch was kept at 220°F for 15 minutes and thinned with 442 parts of ethyl cellosolve.

Example III

634 parts of Epon 1001 (75% NV in xylene), which is the polyglycidyl ether of Bisphenol A having an epoxy equivalent weight of 471 and is commercially available from Shell Chemical Company, were charged into a reactor with 130 parts of PCP-0200 polycaprolactone diol available from Union Carbide and 1.1 parts of dimethyl benzyl amine. The charge was heated to 125°C for 3 hours for chain extension. The batch was then cooled to 95°C and 30 parts of N-methylethanol amine and 36.7 parts (70% solution in methyl isobutyl ketone) of methyl isobutyl diketimine of

diethylene triamine were added. The batch was kept at 113°C for one hour and 83 parts of hexyl cellosolve, 8.3 parts of dibutyl tin dilaurate and 410 parts of ionizable crosslinker of Example I were added. The batch was subsequently dispersed in a solution containing 1000 parts water, 22 parts acetic acid, 6 parts Surfynol 104[1] and 6 parts Geigy Amine C[2]. An electrodeposition bath was prepared by diluting 560 parts of the above resin with 1860 parts of water. Phosphated steel panels were coated at 250 volts for 2 minutes and yielded smooth, hard, flexible films of approximately 0.7 mil thickness when cured for 20 minutes at 180°C.

---

[1]Surfynol 104 is an acetylene based surfactant, specifically 2,4,7,9-tebramethyl-5-decyn 4,7-diol sold by Air Productsd and Chemicals, Inc. of Allentown, Pennyslvania.

[2]Geigy Amine C is a substitued imidazoline derivative sold by Ciba Geigy.

Example IV

174 parts of toluene diisocyanate were charged under a nitrogen blanket into a reactor. 87 parts of methyl ethyl ketoxime were added in a period of one hour keeping the temperature below 110°F by external cooling. After the addition was completed the batch was kept for one hour at 170°F. 60 parts of N-methyl diethanol amine were added in a period of one hour. The temperature of the exothermic reaction was kept below 220°F by external cooling. After the addition was completed the batch was kept at 220°F for 15 minutes and thinned with 137 parts of ethyl cellosolve.

Example V

634 parts of Epon 1001 (75% NV in xylene) and 130 parts of PCP-0220[1] were charged into a suitable reactor. The mixture was heated up to 350°F and 140 parts of xylene were distilled off under vacuum. The batch was cooled down to 260°F and 1.1 part of dimethyl benzyl amine was added. The batch was kept at 260°F for 3 hours for chain extension and then cooled down to 200°F at which point 30 parts of N-methyl ethanol amine and 36.7 parts (70% solution in methyl isobutyl ketone) of methyl isobutyl diketimine of diethylene triamine were added. The batch was kept at 250°F for one hour and 83 parts of hexyl cellosolve, 8.3 parts of dibutyl tin dilaurate and 410 parts of ionizable crosslinker of Example III were added. The batch was subsequently dispersed in a solution containing 100 parts water, 22 parts acetic acid, 6 parts Surfnyol 104 and 6 parts Geigy Amine C. An electrodeposition bath was prepared by diluting 250 parts of the active resin with 960 parts of water. Phosphated steel panels were coated at 225 volts for two minutes and yielded smooth, hard, effective films of approximately 0.5-0.6 mil thickness when cured for 20 minutes at 180°C.

---

[1]PCP-0220 is a polycaprolactone diol sold by Union Carbide.

Example VI

1052 parts of Epon 829 and 306 parts of Bisphenol A were charged into a suitable reactor. The mixture was heated up to 300°F at which time an exothermic reaction took place that brought the temperature up to 350°F. The reaction mixture was kept at this temperature for 30 minutes and then was cooled down to 270°F and 352 parts of

PCP-0200 and 4 parts of dimethyl benzyl amine were added. The batch was kept at 270°F for 1-1/2 hours and then cooled down to 200°F. 100 parts of methyl ethanol amine were added and the mixture was kept at 250°F for one hour. At this point 700 parts of ionizable crosslinker of Example I and 175 parts of hexyl cellosolve were added and the batch after 10 minutes of mixing was dispersed into a solution of 1100 parts of water, 50 parts of acetic acid, 12 parts of Surfynol and 12 parts of Geigy Amine C. The resulting product was a stable water in oil dispersion.

Example VII

696 parts of 2,4 toluene diisocyanate were charged into a suitable reactor. 357 parts of N-methyl diethanol amine, were added dropwise. After 30 minutes the temperature was 50°C and 100 parts of acetone were added. After 30 minutres the addition was finished and another 100 parts of acetone were added. At this time 52 parts of neopentyl glycol, were added and the reaction mixture was kept at 50°C for 30 minutes at which time 87 parts of methyl ethyl ketoxime were added dropwise in a period of 20 minutes. After the addition was finished the mixture was kept at 45°C for 30 minutes and then cooled down to room temperature. 200 parts of this resin were mixed with 400 parts of butyl cellosolve, 200 parts of aluminum silicate, 36 parts of lead silicate, 30 parts of carbon black. The resultant slurry was then ground to a Hegman No. 7 fine reading in a suitable mill.

To prepare an electrodeposition bath 200 parts of the above pigment dispersion were mixed with 640 parts of resin of Example VI, 960 parts of water and 5 parts of acetic acid. Phosphated panels were coated at 225 volts for 2 minutes and cured for 20 minutes at 300°F. When exposed to salt fog at 100°F according to ASTM D-177-73 the panels displayed only 1/32 of an inch creepage from the scribe mark after 15 days.

Example VIII

481 parts of Epon 829, 130 parts of Bisphenol A and 191 parts of Empol 1016 which is a dimer acid with acid value of 193 available from Emery Inc. were charged into a suitable reactor. The mixture was heated up to 330°F at which point an exothermic reaction took place that brought the temperature up to 400°F. The batch was cooled to 350°F and kept at this temperature for one hour. The batch was then cooled to 200°F and 34 parts of N-methyl ethanol amine and 51 parts of methyl isobutyl diketimine of diethylene triamine (70% solution in methyl isobutyl ketone) were added. The batch was kept at 250°F for one hour and 83 parts of hexyl cellosolve, 10 parts of dibutyl tin dilaurate and 520 parts of crosslinker of Example IV were added. The batch was subsequently dispersed in a solution containing 1200 parts of water, 20 parts of acetic acid, 6 parts of Surfynol 104 and 6 parts of Geigy Amine C to produce a water in oil dispersion. 250 parts of this dispersion were inverted with 500 parts of water in order to prepare an electrodeposition bath. Phosphated steel panels were coated at 225 volts for 2 minutes and yielded smooth, hard flexible films of approximately .5-.6 mils thickness when cured for 20 minutes at 180°C.

Example IX

670 parts of toluene were charged into a suitable reactor and were treated up to 230°F. A mixture of 257 parts butyl methacrylate, 293 parts methyl methacrylate, 36 parts styrene, 146 parts glycidyl methacrylate and 36 parts of tert-butyl peroctoate was added in a period of 3 hours. One hour after the monomer addition was complete 3 parts of tert-butyl peroctoate were added and the mixture

was kept at 230°F for two more hours. At this time 370 parts of methyl isobutyl diketimine of diethylene triamine (70% solution in methyl isobutyl ketone) were added. The batch was kept at 250°F for one hour and then 400 parts of solvent were distilled off, 300 parts of crosslinker of Example 1 were added and the batch was dispersed into a solution of 3600 parts water, 80 parts acetic acid, 20 parts Surfynol 104 and 20 parts Geigy Amine C. An electrodeposition bath was prepared by diluting 560 parts of this resin with 1860 parts of water. Phosphated steel panels were coated at 180 volts for 2 minutes and yielded smooth, hard, flexible filing of 0.7 mils thickness when cured for 20 minutes at 180°C.

Example X

Into a suitable reactor were charged 840 parts of hexamethylene diisocyanate under nitrogen blanket. 297.5 parts of N-methyl-diethanol amine were charged in a period of 3 hours. The reaction temperature at the end of the addition was 60°C and at this point 500 parts of acetone were added. After 30 minutes the percent -NCO conversion was measured to be 50%. To the reaction mixture were then added 565 parts of e-caprolactam in a period of 30 minutes, while keeping the temperature at 70°C. The mixture was kept at this temperature for an additional hour at which point an infra-red spectrum showed that all the isocyanate groups were reacted. The batch was then thinned with 635 parts of ethyl cellosolve.

Example XI

Into a suitable reactor were charged 348 parts of 2,4-tolylene diisocyanate under nitrogen blanket. 178.5 parts of N-methyl diethanol amine were added in a period of 2 hours keeping the temperature below 50°C. At this point 43.5 parts of methyl-ethyl ketoxime were added. After 30 minutes an infra-red spectrum verified that all the isocyanate groups were reacted and the batch was thinned with 250 parts of ethyl cellosolve.

Example XII

Into a suitable reactor were charged 1392 parts of 2,4-tolylene diisocyanate under a nitrogen blanket. 178.5 parts of N-methyl diethanol amine were added in a period of 2 hours while keeping the temperature below 50°C. At this point 22.5 parts of 1,4-butane diol were added and the reaction mixture was kept at 50°C for 30 minutes. At this point 43.5 parts of methyl-ethyl ketoxime were added. After 30 minutes an infra-red spectrum verified that all the isocyanate groups were reacted and the batch was thinned with 250 parts of ethyl cellosolve.

Example XIII

1052 parts of Epon 829 and 306 parts of Bisphenol A were charged into a suitable reactor. The mixture was heated to 300°F at which time an exothermic reaction took place that brought the temperature up to 350°F. The reaction mixture was kept at this temperature for 30 minutes and then cooled to 270°F and 352 parts of PCP-0200 and 4 parts of dimethyl benzyl amine were added. The

batch was kept at 270°F for 1-1/2 hours and then cooled down to 200°F. 100 parts of methyl ethanol amine were added and the mixture was kept at 250°F for one hour. At this point 800 parts of ionizable crosslinker of Example I and 175 parts of hexyl cellosolve were added and the batch after 10 minutes of mixing was dispersed into a solution of 1000 parts of water, 50 parts of acetic acid, 12 parts of Surfynol 104[1] and 12 parts of Geigy Amine C[2] to form an oil in water dispersion. This dispersion subsequently may be inverted by adding 1200 parts of water when forming an electrodeposition bath.

---

[1]Surfynol 104 is an acetylene based surfactant, specifically 2,4,7,9-tetramethyl-5-decyn-4,7-diol sold by Air Products and Chemicals, Inc. of Allentown, Pennsylvania.

[2]Geigy Amine C is a substituted imidizoline derivative sold by Ciba Geigy.

Example XIV

634 parts of Epon 1001 (75% NV in Xylene) and 130 parts of PCP-0200[1] were charged into a suitable reactor. The mixture was heated up to 350°F and 140 parts of xylene were distilled off under vacuum. The batch was cooled down to 260°F and 1.1 part of dimethyl benzyl amine were added. The batch was kept at 260°F for 3 hours for chain extension and then cooled down to 200°F at which point 30 parts of N-methyl ethanol amine and 36.7 parts (70% solution in methyl isobutyl ketone) of methyl isobutyl diketimine of diethylene triamine were added. The batch was kept at 250°F for one hour and 83 parts of hexyl

---

[1]PCP-200 is a polycaprolactanediol sold by Union Carbide.

cellosolve, 8.3 parts of dibutyl tin dilaurate and 410 parts of ionizable crosslinker of Example XII were added. The batch was subsequently dispersed in a solution containing 1000 parts water, 22 parts acetic acid, 6 parts Surfnyol 104 and 6 parts Geigy Amine C. An electrodeposition bath was prepared by diluting 250 parts of the active resin with 960 parts of water. Phosphated steel panels were coated at 225 volts for two minutes and yielded smooth, hard, effective films of approximately 0.5-0.6 mil thickness when cured for 20 minutes at 180°C.

Example XV

780 parts resin of Example XI were mixed with 400 parts of butyl cellosolve, 1100 parts of alumimum silicate, 250 parts lead silicate, 200 parts of carbon black. The resultant slurry was then ground to a Hegman No. 7 in a suitable mill. To prepare an electrodeposition bath 100 parts of this millbase were mixed with 110 parts butyl cellosolve, 2 parts acetic acid, 1000 parts of resin of Example XIII and 1000 parts of $H_2O$. Phosphated parts were coated at 180 volts for 2 minutes and cured for 20 minutes at 360°F. When exposed to salt fog at 100°F according to ASTM D-117-73 the panels show only 1/32 of any inch creepage from the scribe mark after 15 days.

Example XVI

696 parts of 2,4 toluene diisocyanate were charged into a suitable reactor. 357 parts of N-methyl diethanol amine, were added dropwise. After 30 minutes the temperature was 50°C and 100 parts of acetone were added. After 30 minutes the addition was finished and another 100 parts of acetone were added. At this time 52

parts of neopentyl glycol, were added and the reaction mixture was kept at 50°C for 30 minutes at which time 87 parts of methyl ethyl ketoxime were added dropwise in a period of 20 minutes. After the addition was finished the mixture was kept at 45°C for 30 minutes and then cooled down to room temperature. 200 parts of this resin were mixed with 400 parts of butyl cellosolve, 200 parts of aluminum silicate, 36 parts of lead silicate, 30 parts of carbon black. The resultant slurry was then ground to a Hegman No.7 fine reading in a suitable mill.

To prepare an electrodeposition bath 200 parts of the above pigment dispersion were mixed with 800 parts of resin of Example XIV, 800 parts of water and 5 parts of acetic cid. Phosphated panels were coated at 225 volts for 2 minutes and cured for 20 minutes at 300°F. When exposed to salt fog at 100°F according to ASTM D-177-73 the panels displayed only 1/32 of an inch creepage from the scribe mark after 15 days.

CLAIMS

1. An aqueous coating composition comprising a film-forming resin bearing reactive functionality and a blocked polyisocyanate crosslinking agent capable of reacting with the reactive functionality at elevated temperatures, characterised in that the crosslinking agent comprises an organic diisocyanate in which one isocyanate group has been blocked with a blocking agent containing reactive hydrogen, and the other isocyanate group has been reacted with an hydroxy group of an hydroxy functional amine containing at least two hydroxy groups and at least one tetiary nitrogen, and in that the crosslinking agent is at least partially solubilised or dispersed in the aqueous composition by an organic acid which protonates at atoms of the crosslinking agent.

2. A coating composition in accordance with claim 1 wherein said crosslinking agent comprises one or more compounds derived from an aliphatic, cycloaliphatic, . or aromatic diisocyanate ., or a hybrid thereof.

3. A coating composition in accordance with claim 1 or claim 2 wherein said blocking agent comprises (i) an aliphatic, cycloaliphatic or aromatic alkyl monoalcohol, (ii) an oxime, (iii) a lactam, or (iv) a triazole, or a mixture thereof.

4. A coating composition in accordance with any one of claims 1 to 3 wherein said hydroxy functional amine comprises an aliphatic, cycloaliphatic or aromatic amine or a mixture thereof.

5. A coating composition in accordance with any one of claims 1 to 4 wherein said hydroxy functional amine contains multiple tertiary nitrogens.

6. A coating composition in accordance with any one of claims 1 to 5 wherein said hydroxy functional amine contains a single tertiary nitrogen and comprises a diol, or a triol or a

mixture thereof.

7. A coating composition in accordance with claim 6 wherein said hydroxy functional amine comprises a diol or triol represented by the formula

$$R_3 - N\begin{matrix} R_1 \\ R_2 \end{matrix} \quad \ldots\ldots\ (I)$$

wherein $R_1$ and $R_2$ represent:

$-(CH_2)_nOH$, wherein n = 1-5; $-(CH_2CH_2O)_nCH_2CH_2-OH$, where n = 1-12;

$-(CH_2CH_2CH_2CH_2CH_2\overset{O}{\overset{\|}{C}}-O)_nCH_2CH_2-OH$, wherein n = 1-12; or

$-(\overset{CH_3}{\overset{|}{CH}}-CH_2-O)_nCH_2CH_2-OH$, where n = 1-12; and

$R_3$ represents a $C_1$-$C_4$ alkyl group or any one of the groups represented by $R_1$ and $R_2$.

8. A coating composition according to any one of claims 1 to 7 wherein the crosslinking agent is derived from an organic diisocyanate bearing one isocyanate group which is more reactive than the other and is prepared by

(A) reacting the organic diisocyanate with sufficient blocking agent to block substantially all of said more reactive isocyanate groups; and

(B) reacting the hydroxy functional amine with sufficient reaction product (A) to react substantially all the free or unblocked isocyanate groups of reaction product (A) with hydroxyl groups of said amine.

9. A coating composition in accordance with claim 8 wherein said organic diisocyanate is aromatic.

10. A coating composition in accordance with claim 8 or claim 9 wherein said diisocyanate comprises 1-isocyanato-(p-phenyl isocyanate) methane; 1-isocyanato-2-p-phenyl isocyanato ethane; 4,4'-diisocyanate0-2-nitro-biphenyl; isophorone didsocyante; or a compound having the formula:

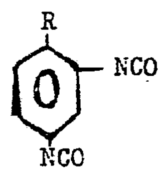

or

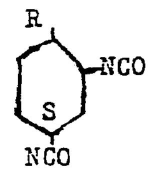

wherein R represents methyl, ethyl, t-butyl, chloro, bromomethyl, ethoxy, isobutoxy, isopropyl, trichloromethyl or methoxy or mixture thereof.

11. A coating composition according to any one of claims 1 to 7 wherein the crosslinking agent is prepared by

(A) reacting an excess of the organic diisocyanate with the hydroxy functional amine to form an isocyanate terminated tertiary amine containing intermediate; and

(B) reacting the said intermediate with sufficient of the blocking agent to react with substantially all of the terminal isocyanate groups of the said intermediate.

12. A coating composition in accordance with claim 11 wherein said organic diisocyanate is an isocyanate terminated polyurethane prepolymer prepared by reacting an excess of an aliphatic, cycloaliphatic or aromatic diisocyanate with a diol having a number average molecular weight up to about 500.

13. A coating composition in accordance with claim 12 wherein said diol employed comprises an aliphatic diol having the formula $HO-(CH_2)_n-OH$, where n = 2-8; a cycloaliphatic diol; a polyester diol of the polycaprolactone type; a polyether diol having the formula $H(OCH_2CH_2)_nOH$, where n = 2-8; or a mixture thereof.

14. A coating composition in accordance with claim 13 wherein said diol comprises 1,4 butane diol; 1,6 hexane diol; neopentyl glycol; 1,5 pentanediol; 1,4 cyclohexanediol; or a mixture thereof.

15. A coating composition in accordance with any one of claims 12 to 14 wherein said diisocyanate and said diol are reacted in a molar ratio of 1.5-2.0 to 1.

16. A coating composition in accordance with any one of claims 11 to 15 wherein the hydroxy functional amine contains a single tertiary nitrogen atom and comprises a diol or a mixture of diols.

17. A coating composition in accordance with claim 16 wherein the hydroxy functional amine is of the formula (I) wherein $R_1$ and $R_2$ are as defined in claim 8, and $R_3$ represents a $C_1$ - $C_4$ alkyl groups.

18. A coating composition in accordance with any one of claims 11 to 17 wherein said organic diisocyanate and said hydroxy functional amine are reacted in a molar ratio of from 1:1 to 2:1.

19. A coating composition in accordance with any one of claims 1 to 16 wherein said composition is adapted to be applied to a substrate-cathode by electrodeposition and wherein both said crosslinking agent and said film forming resin are solubilsed at least in part by ionisation as a result of protonation of an amine nitrogen by an organic acid.

20. A coating composition in accordance with any one of claims 1 to 19 wherein the film-forming resin comprises an epoxy/ amine adduct bearing hydroxyl functionality.

21. A coating composition according to any one of claims 1 to 20 wherein the organic acid has a dissociation constant of at least $10^{-5}$.

European Patent Office

0083232

# EUROPEAN SEARCH REPORT

EP 82 30 6950

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 319 657 (P.P.G. IND.)<br>* Pages 18,19, claims 1,4,6,7; page 4, lines 2-11; page 5, line 18 - page 6, line 33 *<br>--- | 1-4,6-10,19 | C 08 G 18/80<br>C 08 G 18/08<br>C 08 G 18/64<br>C 09 D 5/40<br>C 09 D 3/48 |
| A | US-A-4 031 050 (R.D. JERABEK)<br>* Columns 11,12, claims 1,4; column 2, line 58 - column 3, line 26 *<br>----- | 1 | |
| | | | **TECHNICAL FIELDS SEARCHED (Int. Cl. 3)** |
| | | | C 08 G<br>C 09 D |

The present search report has been drawn up for all claims

| Place of search | Date of completion of the search | Examiner |
|---|---|---|
| THE HAGUE | 15-04-1983 | VAN PUYMBROECK M.A. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82